# EUROPEAN PATENT SPECIFICATION

(11) **EP 3 176 002 B1**
(45) Date of publication and mention of the grant of the patent: **12.09.2018**
(21) Application number: 15826357.4
(22) Date of filing: 22.07.2015
(51) Int. Cl.: B60C 5/01, B60C 1/00, B60C 15/00, B60C 15/04

(54) **TIRE**
REIFEN
PNEU

(30) Priority: 30.07.2014 JP 2014155167
(43) Date of publication of application: 07.06.2017
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2015/070880
(87) International publication number: WO 2016/017508

(56) References cited:
- EP-A1- 3 020 571
- WO-A1-2013/089111
- WO-A1-2013/089111
- WO-A1-2015/005171
- JP-A- 2005 112 075
- JP-A- 2012 061 893
- US-A- 3 956 448

## Description

### Technical Field

The present invention relates to a tire in which a tire frame member is formed using resin material.

### Background Art

Tires formed of rubber, organic fiber material, or a steel member are conventionally known. In recent years, there is a demand to make tire frame members of a thermoplastic polymer material such as thermoplastic elastomers (TPE) or thermoplastic resins, from the perspectives of weight reduction and ease of recycling. For example, Japanese Patent Application Laid-Open (JP-A) No. H03-143701 describes how a bead core is covered with a thermoplastic elastomer to form the tire frame member, a reinforcing layer is disposed at the outer circumference of the tire frame member, and a tread member is disposed at the outer circumference thereof and vulcanization bonded thereto. A tire according to the preamble of claim 1 is shown in WO2013/089111 A1. Reference is also made to EP 3020571 A1, which discloses a tire with at least a portion formed from a resin material and US 3956448 A, which discloses a method of forming a low pressure, flotation type tire.

### SUMMARY OF INVENTION

### Technical Problem

In tires in which the tire frame member is formed using a resin material, a thinner tire frame member is effective in order to reduce the weight and reduce the vertical spring of the tire. However, in cases in which the tire frame member is made thinner, there is a concern of a reduction in pressure resistance and cut resistance performance.

An object of exemplary embodiments of the present invention is to achieve both pressure resistance and cut resistance performance while attaining a lighter weight tire.

### Solution to Problem

A tire according to a first aspect of the present invention includes a bead portion in which a bead core of resin-covered cord is embedded, and a reinforcing layer that is formed of a reinforcing material covered by a resin material, that is thermally welded to the bead core, and that extends from the bead portion to a side portion connected to a tire radial direction outer side of the bead portion.

In this tire, the reinforcing layer extends from the bead portion to the side portion, thereby enabling both pressure resistance and cut resistance performance to be achieved while attaining a lighter weight tire. The bead core is formed of resin-covered cord and the reinforcing layer is thermally welded to the bead core, such that there is no need to provide an adhered layer, unlike in cases in which the reinforcing layer is adhered to the bead core.

A second aspect is the tire according to the first aspect, wherein a bead reinforcing member is disposed at the bead portion, the bead reinforcing member extending from the bead core toward the tire radial direction outer side and having a thickness in a tire width direction that becomes thinner on progression toward the tire radial direction outer side.

In this tire, the bead reinforcing member enables rigidity to be raised in the vicinity of the bead portion. The thickness of the bead reinforcing member in the tire width direction becomes thinner on progression toward the tire radial direction outer side, enabling ride quality performance to be secured.

A third aspect is the tire according to the first aspect or the second aspect includes a tire frame member that is made of a resin material and that includes the bead portion and the side portion.

In this tire, the tire frame member made of a resin material enables pressure resistance performance to be improved while attaining a lighter weight tire.

A fourth aspect is the tire according to any one of the first aspect to the third aspect, wherein a terminal end on a bead core side of the reinforcing layer is positioned at a periphery of the bead core.

In this tire, the terminal end on the bead core side of the reinforcing layer is positioned at the periphery of the bead core, thereby enabling the manufacturing process to be simpler and enabling the length of the member configuring the reinforcing layer to be made shorter than in structures in which the reinforcing layer is folded back at the bead core. This enables both reinforcement and simplification of the tire frame member to be achieved and enables a lighter weight tire to be attained.

A fifth aspect is the tire according to any one of the first aspect to the third aspect, wherein the bead core is formed of a strand bead, and a terminal end on the bead core side of the reinforcing layer is positioned between cords of the bead core.

In this tire, the terminal end on the bead core side of the reinforcing layer is positioned between the cords of the bead core, thereby enabling the join between the reinforcing layer and the bead core to be made stronger.

### Advantageous Effects of Invention

Exemplary embodiment of the present invention obtain excellent advantageous effects of enabling both pressure resistance and cut resistance performance to be achieved while attaining a lighter weight tire.

### BRIEF DESCRIPTION OF DRAWINGS

Fig. 1 is a perspective view illustrating a state in which a tire according to an exemplary embodiment has been sectioned along the axis of rotation of the tire.
Fig. 2A is a cross-section illustrating a state in which a reinforcing layer has been thermally welded to a bead core.
Fig. 2B is a cross-section illustrating a state in which a tire frame member has been molded integrally with the reinforcing layer and the bead core of Fig. 2A, and a belt layer has been disposed at a crown portion of the tire frame member.
Fig. 2C is a cross-section illustrating a tire in which rubber has been molded to an outer face of a tire frame member.
Fig. 3A is a cross-section illustrating an example of a state in which a reinforcing layer and a bead core are joined together.
Fig. 3B is a cross-section illustrating an example of a state in which a reinforcing layer and a bead core are joined together.
Fig. 3C is a cross-section illustrating an example of a state in which a reinforcing layer and a bead core are joined together.
Fig. 3D is a cross-section illustrating an example of a state in which a reinforcing layer and a bead core are joined together.
Fig. 3E is a cross-section illustrating an example of a state in which a reinforcing layer and a bead core are joined together.
Fig. 3F is a cross-section illustrating an example of a state in which a reinforcing layer and a bead core are joined together.
Fig. 4A is a cross-section illustrating an example of a state in which a reinforcing layer and a bead core are joined together.
Fig. 4B is a cross-section illustrating an example of a state in which a reinforcing layer and a bead core are joined together.
Fig. 4C is a cross-section illustrating an example of a state in which a reinforcing layer and a bead core are joined together.
Fig. 4D is a cross-section illustrating an example of a state in which a reinforcing layer and a bead core are joined together.
Fig. 5A is a cross-section illustrating an example in which a terminal end on a bead core side of a reinforcing layer is positioned between cords of a bead core configured from a strand bead superimposed in the tire radial direction.
Fig. 5B is a cross-section illustrating an example in which a terminal end on a bead core side of a reinforcing layer is positioned between cords of a bead core configured from a strand bead superimposed in the tire radial direction.
Fig. 5C is a cross-section illustrating an example in which a terminal end of a reinforcing layer is positioned between a cord of a bead core configured from a mono-strand bead superimposed in the tire width direction.
Fig. 5D is a cross-section illustrating an example in which a terminal end of a reinforcing layer is positioned between cords of a bead core configured from a strand bead superimposed in the tire width direction.
Fig. 6A is a cross-section illustrating a state in which a terminal end on a bead core side of a reinforcing layer has been disposed between cords of the bead core.
Fig. 6B is a cross-section illustrating a state in which a reinforcing layer has been wound about the periphery of a bead core.
Fig. 7 is a cross-section illustrating a tire in which rubber has been molded to an outer face of a reinforcing layer, and a bead reinforcing member has been disposed at a bead portion.

### DESCRIPTION OF EMBODIMENTS

Explanation follows regarding exemplary embodiments of the present invention, with reference to the drawings. In the drawings, the arrow C direction indicates the tire circumferential direction, the arrow R direction indicates the tire radial direction, and the arrow W direction indicates the tire width direction. The tire radial direction is a direction orthogonal to the tire axis (not illustrated in the drawings). The tire width direction is a direction parallel to the axis of rotation of the tire. The tire width direction is interchangeable with references to the tire axial direction.

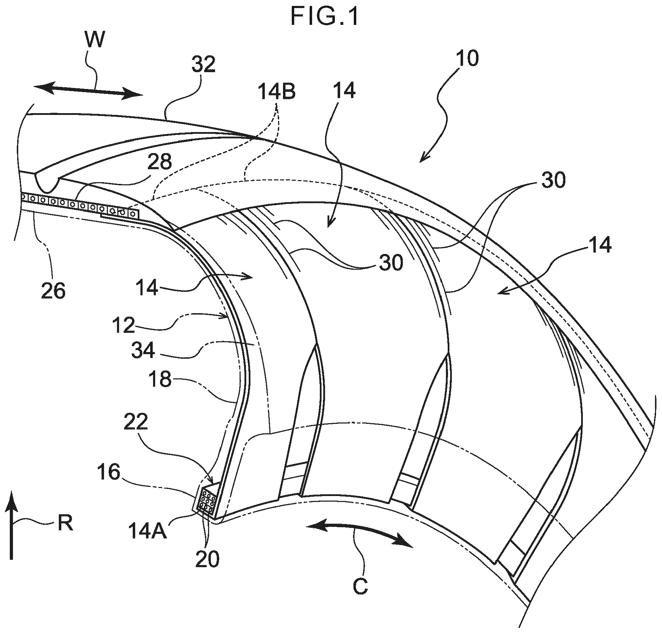

A tire 10 according to an exemplary embodiment illustrated in Fig. 1 includes a tire frame member 12 and reinforcing layers 14.

The tire frame member 12 is made using a resin material, and includes bead portions 16, side portions 18 connected to the tire radial direction outer side of each bead portion 16, and a crown portion 26 that is connected to the tire width direction inner side of the side portions 18 and on which a tread 32 is disposed. Note that bead portion 16 referred to herein refers to a range from a tire radial direction inner side end of the tire frame member 12 to 30% of the tire cross section height. The tire frame member 12 has a ring shape about the tire axis. Examples of the resin material configuring the tire frame member 12 include thermoplastic resins (including thermoplastic elastomers), thermoset resins, and other general-use resins, as well as engineering plastics (including super engineering plastics). Vulcanized rubber is not included among these resin materials.

Thermoplastic resins (including thermoplastic elastomers) are polymer compounds of materials that soften and flow with increased temperature, and that adopt a relatively hard and strong state when cooled. In the present specification, out of these, distinction is made between polymer compounds that soften and flow with increasing temperature, that adopt a relatively hard and strong state on cooling, and that have a rubber-like elasticity, considered to be thermoplastic elastomers, and polymer compounds that soften and flow with increasing temperature, that adopt a relatively hard and strong state on cooling, and do not have a rubber-like elasticity, considered to be non-elastomer thermoplastic resins.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinked-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic resin materials have, for example, a deflection temperature under load (loading at 0.45 MPa), as defined by ISO 75-2 or ASTM D648, of 78°C or greater; a tensile yield strength, as defined by JIS K7113, of 10 MPa or greater; and a tensile elongation at break (JIS K7113), also as defined by JIS K7113, of 50% or greater. Materials with a Vicat softening temperature, as defined by JIS K7206 (method A), of 130°C or greater may be employed.

Thermoset resins are polymer compounds that cure to form a three-dimensional mesh structure with increasing temperature. Examples of thermoset resins include phenolic resins, epoxy resins, melamine resins, and urea resins.

In addition to the thermoplastic resins (including thermoplastic elastomers) and thermoset resins already listed above, general-purpose resins such as (meth)acrylic-based resins, EVA resins, vinyl chloride resins, fluororesins, and silicone-based resins may also be employed as the resin material.

An annular-shaped bead core 22 formed of resin-covered cords 20 is embedded in each bead portion 16. Steel, organic fibers, resin, or the like may be employed as the material of the cord 20. The bead core 22 is formed of, for example, a strand bead formed by superimposing plural (three, for example) resin-covered cords 20 on each other while winding the cords 20 around the tire circumferential direction. Plural resin-covered cords 20 are arrayed inside a cross-section in the tire width direction of the strand bead. For example, three layers of cords 20 are superimposed on each other.

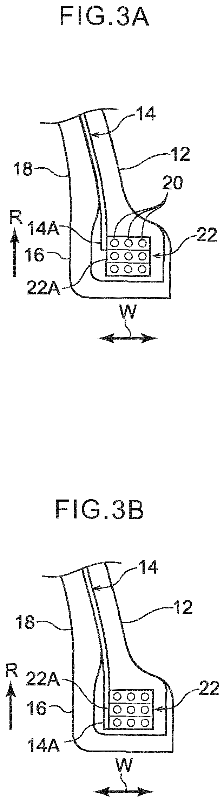

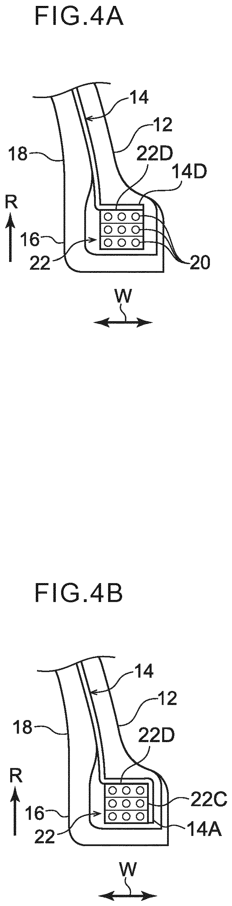

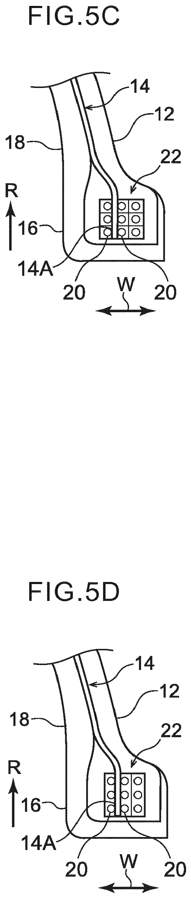

Note that the superimposed direction of the cords 20 may be the tire radial direction as illustrated in Fig. 3A to Fig. 3F and Fig. 4A to Fig. 4D, or may be the tire width direction as illustrated in Fig. 5D, or may be another direction. As illustrated in Fig. 5C, the bead core 22 may be a mono-strand bead formed by superimposing one resin-covered cord 20 on itself in both the tire width direction and the tire radial direction while winding the cord 20 around the tire circumferential direction. Moreover, the number of superimposed layers is not limited to three. As long as the cords 20 are covered in resin, there is no particular limitation to the method of forming the bead core 22, and the bead core 22 is not necessarily formed of a strand bead.

The resin material covering the cord 20 is preferably an olefin-based, ester-based, amide-based, or urethane-based TPE, or a TPV that is a mixed, partly rubber-based resin. Such a thermoplastic material preferably has, for example, a deflection temperature under load (at 0.45 MPa during loading), as defined by ISO 75-2 or ASTM D648, of 75 °C or greater; a tensile yield elongation, also as defined by JIS K7113, of 10% or greater; a tensile elongation at break, also as defined by JIS K7113, of 50% or greater; and a Vicat softening temperature, as defined by JIS K7113 (method A), of 130 °C or greater.

In the tire frame member 12, the crown portion 26 is connected to the tire radial direction outer side of the side portions 18. A belt layer 28 is provided around the outer circumference of the crown portion 26. The belt layer 28 is configured by winding a resin-covered cord in a spiral shape around the tire circumferential direction, for example.

The tread 32 is provided at the tire radial direction outer side of the crown portion 26 and the belt layer 28. The tread 32 is formed of a rubber having superior abrasion resistance to that of the resin material forming the tire frame member 12. The same types of tread rubber as those employed in conventional rubber-made pneumatic tires, for example, styrene-butadiene rubber (SBR), may be employed as the rubber. The tread 32 may be configured by employing another type of resin material having superior abrasion resistance characteristics to those of the resin material forming the tire frame member 12.

In each reinforcing layer 14, reinforcing material 30 is covered by a resin material, and the reinforcing layer 14 is thermally welded to the bead core 22. Thermal welding refers to using heat to melt and join the resin material of the reinforcing layers 14 and the resin material of the bead core 22. The reinforcing layers 14 are thermally welded to the bead core 22.

A similar material to the resin material configuring the tire frame member 12, for example, may be employed as the resin material covering the reinforcing material 30. One face, or both faces of the reinforcing material 30 may be covered by the resin material. In cases in which both faces of the reinforcing material 30 are covered by the resin material, the reinforcing material 30 can be disposed at the thickness direction center of the reinforcing layers 14. In cases in which both faces are covered, different resin materials may be employed on one face and on the other face.

The reinforcing material 30 is, for example, a twisted cord or a collective body of plural filaments. The material of the reinforcing material 30 is, for example, aliphatic polyamide, polyethylene terephthalate, glass, aramid, or a metal such as steel. The reinforcing material 30 extends along at least the tire radial direction in the reinforcing layers 14. Reinforcing material 30 extending around the tire circumferential direction may be combined with this reinforcing material 30, and these reinforcing materials 30 may be overlapped so as to mutually intersect each other. In such cases, the reinforcing materials 30 may be woven or braided together to configure a cloth shape. Note that the reinforcing material 30 may be sloped with respect to the tire radial direction or the tire circumferential direction.

As illustrated in Fig. 3A to Fig. 3F, Fig. 4A to Fig. 4D, and Fig. 5A to Fig. 5D, various variations are conceivable as modes of joining the reinforcing layers 14 to the bead core 22. Note that the bead core 22 illustrated in Fig. 3A to Fig. 3F, Fig. 4A to Fig. 4D, Fig. 5A and Fig. 5B is formed of a strand bead of three layers of superimposed on each other in the tire radial direction. The bead core 22 illustrated in Fig. 5D is formed of a strand bead of three layers of superimposed on each other in the tire width direction. The bead core 22 illustrated in Fig. 5C is a mono-strand bead superimposed on itself in three layers in both the tire radial direction and the tire width direction.

In the example illustrated in Fig. 3A, the reinforcing layer 14 is joined to a part of a tire width direction outer side face 22A of the bead core 22. This part is the layer that is positioned furthest toward the tire radial direction outer side from out of the three layers configuring the bead core 22.

In the example illustrated in Fig. 3B, the reinforcing layer 14 is joined to the entire surface of the tire width direction outer side face 22A of the bead core 22.

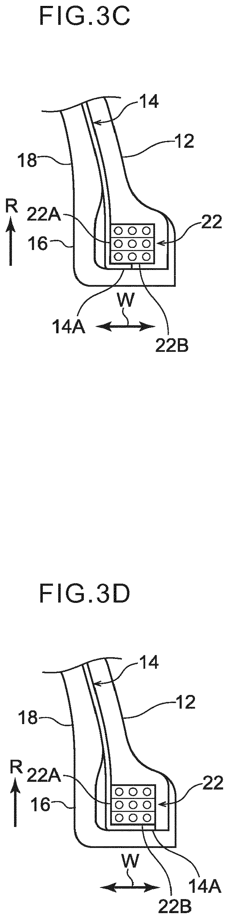

In the example illustrated in Fig. 3C, the reinforcing layer 14 is bent into a substantially L shape so as to run along the tire width direction outer side face 22A and a tire radial direction inner side face 22B of the bead core 22, and is joined thereto spanning from the tire width direction outer side face 22A to the tire width direction center of the tire radial direction inner side face 22B.

In the example illustrated in Fig. 3D, the reinforcing layer 14 is joined to the bead core 22 across the entire surface from the tire width direction outer side face 22A to the tire radial direction inner side face 22B.

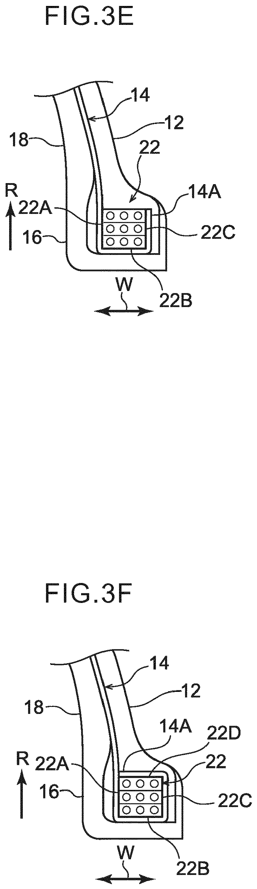

In the example illustrated in Fig. 3E, the reinforcing layer 14 is bent into a substantially U shape so as to run along the tire width direction outer side face 22A, the tire radial direction inner side face 22B, and a tire width direction inner side face 22C of the bead core 22, and is joined thereto across the entire surface from the tire width direction outer side face 22A to the tire radial direction inner side face 22B and the tire width direction inner side face 22C.

In the example illustrated in Fig. 3F, the reinforcing layer 14 surrounds the periphery of the bead core 22. The reinforcing layer 14 is bent so as to surround the bead core 22 and is joined thereto across the entire surface of the tire width direction outer side face 22A, the tire radial direction inner side face 22B, the tire width direction inner side face 22C and a tire radial direction outer side face 22D.

In the example illustrated in Fig. 4A, the reinforcing layer 14 is joined to the entire surface of the tire radial direction outer side face 22D of the bead core 22.

In the example illustrated in Fig. 4B, the reinforcing layer 14 is bent into a substantially L shape so as to run along the tire radial direction outer side face 22D and the tire width direction inner side face 22C of the bead core 22, and is joined thereto across the entire surface from the tire radial direction outer side face 22D to the tire width direction inner side face 22C.

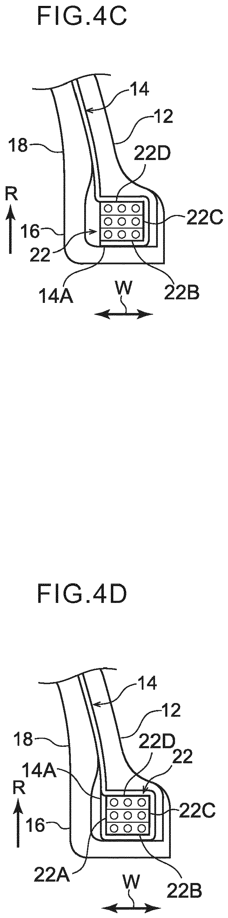

In the example illustrated in Fig. 4C, the reinforcing layer 14 is bent into a substantially U shape so as to run along the tire radial direction outer side face 22D, the tire width direction inner side face 22C, and the tire radial direction inner side face 22B, and is joined thereto across the entire surface from the tire radial direction outer side face 22D to the tire width direction inner side face 22C and the tire radial direction inner side face 22B.

In the example illustrated in Fig. 4D, the reinforcing layer 14 surrounds the periphery of the bead core 22. The reinforcing layer 14 is bent so as to surround the bead core 22, and is joined thereto across the entire surface of the tire radial direction outer side face 22D, the tire width direction inner side face 22C, the tire radial direction inner side face 22B and the tire width direction outer side face 22A.

In the examples illustrated in Fig. 3A to Fig. 3F and Fig. 4A to Fig. 4D described above, a terminal end 14A on a bead core side of each reinforcing layer 14 is positioned at a periphery of the respective bead core 22. The terminal end 14A is thermally welded to the bead core 22. Note that it is sufficient that the terminal end 14A is positioned at the periphery of the bead core 22, and the terminal end 14A is not necessarily thermally welded to the bead core 22.

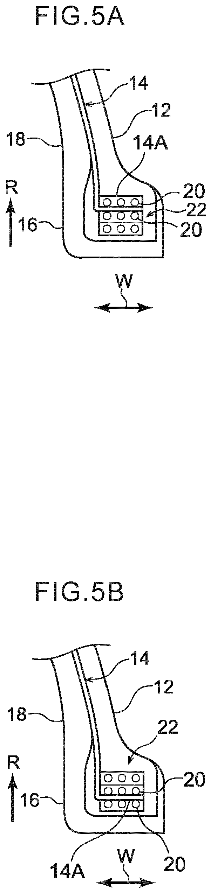

In the examples illustrated in Fig. 5A to Fig. 5D, the terminal end 14A on the bead core 22 side of each reinforcing layer 14 is positioned between the cords 20 of the bead core 22. This can be realized by sandwiching the terminal end 14A of the reinforcing layer 14 between the cords 20 when manufacturing the bead core 22 by superimposing the cords 20 on each other while winding the cords 20 around the tire circumferential direction.

In the example illustrated in Fig. 5A, the terminal end 14A of the reinforcing layer 14 is positioned between the layer positioned furthest toward the tire radial direction outer side and the layer positioned at the tire radial direction center, from out of the three layers configuring the bead core 22.

In the example illustrated in Fig. 5B, the terminal end 14A of the reinforcing layer 14 is positioned between the layer positioned furthest toward the tire radial direction inner side and the layer positioned at the tire radial direction center, from out of the three layers configuring the bead core 22.

In the example illustrated in Fig. 5C, the bead core 22 is a mono-strand bead, and the terminal end 14A of the reinforcing layer 14 is positioned between three cord 20 pairs that are adjacent to each other in the tire width direction. In the example illustrated in Fig. 5D, the terminal end 14A of the reinforcing layer 14 is positioned between the layer positioned further toward the tire width direction outer side and the layer positioned at the tire width direction center, from out of the three layers configuring the bead core 22. The bead core 22 is formed of a strand bead by superimposition in the tire width direction. In Fig. 5C and Fig. 5D, the terminal end 14A of each reinforcing layer 14 is in a state inserted between the cord(s) 20 of the bead core 22 from the tire radial direction outer side toward the inner side.

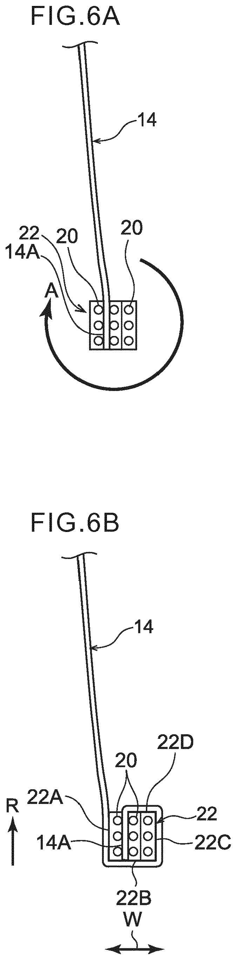

In addition thereto, as illustrated in Fig. 6A and Fig. 6B, after having disposed the terminal end 14A of each reinforcing layer 14 between the cords 20 of the respective bead core 22, the terminal end 14A of the reinforcing layer 14 may be integrally formed to the bead core 22 by winding the reinforcing layer 14 about the periphery of the bead core 22 in the arrow A direction, for example, and then thermally welding the reinforcing layer 14 to the bead core 22,. In this example, the reinforcing layer 14 is joined to the entire surface of the tire width direction outer side face 22A, the tire radial direction inner side face 22B, and the tire width direction inner side face 22C, and to part of the tire radial direction outer side face 22D of the bead core 22, and the terminal end 14A is positioned between the cords 20.

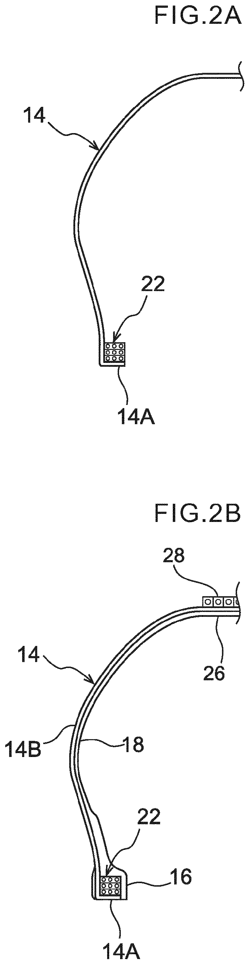

As illustrated in Fig. 2A, each reinforcing layer 14 is thermally welded and integrally formed to the respective bead core 22. In cases in which the terminal end 14A of the reinforcing layer 14 is positioned between the cords 20 of the bead core 22 (Fig. 5A to Fig. 5D, Fig. 6A, and Fig. 6B), the reinforcing layer 14 is integrally formed to the bead core 22 during manufacture of the bead core 22.

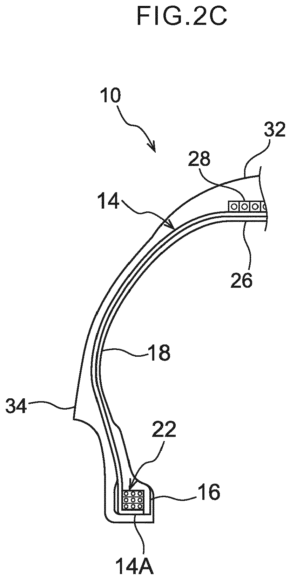

Simple explanation follows regarding a manufacturing process of the tire 10. First, the integrally-formed bead core 22 and the reinforcing layers 14 are disposed in a mold (not illustrated in the drawings) and a resin material is supplied into a cavity inside the mold, thereby molding the tire frame member 12 made of resin material integrally with the bead core 22 and the reinforcing layers 14, as illustrated in Fig. 2B. The reinforcing layers 14 are positioned at an outer face of the tire frame member 12, spanning from the side portions 18 to the crown portion 26. The above-described belt layer 28 is provided around the outer circumference of the crown portion 26 of the tire frame member 12. As illustrated in Fig. 2C, a rubber layer 34 is then molded to the periphery of each bead portion 16 at the outer side of the side portion 18 of the tire frame member 12, and the tread 32 is vulcanization molded to the tire radial direction outer side of the belt layer 28. The tire 10 according to the present exemplary embodiment is obtained accordingly.

As illustrated in Fig. 1, the reinforcing layers 14 extend from the respective bead portion 16 along the side portion 18, and are disposed arrayed about the tire circumferential direction. Reinforcing layers 14 that are adjacent to each other about the tire circumferential direction may be disposed in close contact with each other, or may be disposed with a spacing in the tire circumferential direction therebetween.

As an example, a tire radial direction outer side end 14B of each reinforcing layer 14 extends as far as the crown portion 26 of the tire frame member 12, and overlaps the belt layer 28. The overlap amount with the belt layer 28, from a tire width direction end portion of the belt layer 28 toward the tire width direction center side, is preferably 5 mm or greater. The reinforcing layer 14 may extend as far as the tire width direction center. Note that the position of the tire radial direction outer side end 14B of the reinforcing layer 14 may terminate in the vicinity of a maximum tire width position on the side portion 18, or may terminate just before reaching the crown portion 26 (what is referred to as a buttress portion).

### Effects

Explanation follows regarding effects of the present exemplary embodiment configured as described above. In the tire 10 according to the present exemplary embodiment in Fig. 1, the reinforcing layers 14 are provided at the outer face of the tire frame member 12, specifically, spanning from each bead portion 16 across to the respective side portion 18 and the crown portion 26, thereby enabling the propagation speed of scratches on the tire frame member 12 to be slowed. This enables the cut resistance performance of the tire 10 to be improved. The reinforcing layers 14 are arrayed about the tire circumferential direction, and are not in a form that is integrally continuous around the tire circumferential direction, such that the rigidity in the tire circumferential direction does not become too high, and there is a good balance with the rigidity in the tire radial direction.

An outer face of each reinforcing layer 14 is positioned at the outer face of the tire frame member 12, such that durability with respect to bending deformation of the tire 10 is improved. The reinforcing layers 14 are joined to the respective bead cores 22, thereby enabling tensile force occurring in the tire 10 to be borne by the reinforcing layers 14. This enables resistance with respect to internal pressure (pressure resistance) to be improved. This also enables the thickness of the tire frame member 12 to be made thinner, thereby enabling ride quality to be improved.

In Fig. 3A to Fig. 3F and Fig. 4A to Fig. 4D, each bead core 22 is formed by covering the cords 20 with resin and the reinforcing layers 14 are thermally welded to the respective bead core 22, such that there is no need to provided adhered layers, unlike cases in which the reinforcing layers 14 are adhered to the bead core 22.

In particular, in the examples illustrated in Fig. 3A to Fig. 3F and Fig. 4A to Fig. 4D, the terminal end 14A on the bead core 22 side of each reinforcing layer 14 is positioned at the periphery of the respective bead core 22, such that the manufacturing process is simpler and the length of the members configuring the reinforcing layers 14 can be made shorter than in structures in which the terminal end 14A is folded back at the bead core 22. This enables both reinforcement and simplification of the tire frame member 12 to be achieved, and enables a lighter weight tire 10 to be attained.

In the examples illustrated in Fig. 5A to Fig. 5D, the terminal end 14A on the bead core 22 side of each reinforcing layer 14 is positioned between the cords 20 of the respective bead core 22, thereby enabling the join between the reinforcing layer 14 and the bead core 22 to be made stronger.

Thus, by employing the reinforcing layers 14 that extend from the bead portions 16 to the side portions 18, the tire 10 according to the present exemplary embodiment enables both pressure resistance and cut resistance performance to be achieved while reducing the weight of the tire 10.

### Other Exemplary Embodiments

Although the reinforcing layers 14 have been disposed arrayed about the tire circumferential direction, configuration may be such that the reinforcing layers 14 are integrally formed. Moreover, reinforcing layers 14 that are adjacent to each other about the tire circumferential direction may partially overlap each other. Furthermore, other reinforcing layers (not illustrated in the drawings) may be disposed between the reinforcing layers 14 that are adjacent to each around the tire circumferential direction. In such cases, the other reinforcing layers and the reinforcing layers 14 may partially overlap each other. Configuration may also be such that one tire circumferential direction side of each other reinforcing layer partially overlaps the adjacent reinforcing layer 14, and the other tire circumferential direction side is provided with a gap of 0.1 mm or greater, for example, without overlapping the adjacent reinforcing layer 14.

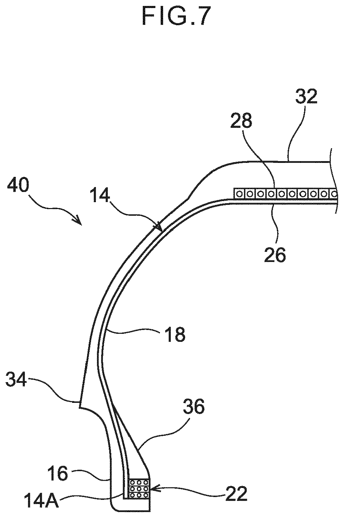

As in a tire 40 illustrated in Fig. 7, configuration may be such that a tire frame member is configured by the reinforcing layers 14, and the tire frame member 12 (see Fig. 2C) made of resin material is omitted. In such cases, the reinforcing layers 14 are disposed around the tire circumferential direction without any gaps therebetween, such that the tire 40 can be filled with air.

In the tire 40, a bead reinforcing member 36 is disposed at each bead portion 16. The bead reinforcing member 36 is configured using a harder rubber than the rubber layer 34, for example. The bead reinforcing member 36 enables rigidity to be raised in the vicinity of the bead portion 16. The bead reinforcing member 36 extends from the bead core 22 toward the tire radial direction outer side, and its thickness in the tire width direction becomes thinner on progression toward the tire radial direction outer side. This enables ride quality performance to be secured.

## Claims

1. A tire (10) comprising:
a bead portion (16) in which a bead core (22) of resin-covered cord (20) is embedded; **characterised by**
a reinforcing layer (14) that is formed of a reinforcing material (30) covered by a resin material, that is thermally welded to the bead core (22), and that extends from the bead portion (16) to a side portion (18) connected to a tire radial direction outer side of the bead portion (16).

2. The tire (10) of claim 1, wherein
a bead reinforcing member (36) is disposed at the bead portion (16), the bead reinforcing member (36) extending from the bead core (22) toward the tire radial direction outer side and having a thickness in a tire width direction that becomes thinner on progression toward the tire radial direction outer side.

3. The tire (10) of claim 1 or claim 2, comprising a tire frame member (12) that is made of a resin material and that includes the bead portion (16) and the side portion (18).

4. The tire (10) of any one of claim 1 to claim 3, wherein a terminal end (14A) on a bead core side of the reinforcing layer (14) is positioned at a periphery of the bead core (22).

5. The tire (10) of any one of claim 1 to claim 3, wherein:
the bead core (22) is formed of a strand bead; and
a terminal end (14A) on a bead core side of the reinforcing layer (14) is positioned between cords (20) of the bead core (22).

## Patentansprüche

1. Reifen (10), umfassend:
einen Wulstabschnitt (16), in welchem ein Wulstkern (22) aus einem harzüberzogenem Kord (20) eingebettet ist; **gekennzeichnet durch**
eine Verstärkungsschicht (14), welche aus einem Verstärkungsmaterial (30) gebildet ist, welches durch ein Harzmaterial abgedeckt ist, welches mit dem Wulstkern (22) thermisch verschweißt ist, und welches sich vom Wulstabschnitt (16) zu einem Seitenabschnitt (18) erstreckt, welcher mit einer Reifenaußenseite in der Radialrichtung des Wulstabschnitts (16) verbunden ist.

2. Reifen (10) nach Anspruch 1, wobei
ein Wulstverstärkungsglied (36) am Wulstabschnitt (16) angeordnet ist, wobei das Wulstverstärkungsglied (36) sich vom Wulstkern (22) zur Reifenaußenseite in der Radialrichtung erstreckt und eine Dicke in einer Reifenbreitenrichtung aufweist, welche sich zur Reifenaußenseite in der Radialrichtung allmählich verjüngt.

3. Reifen (10) nach Anspruch 1 oder 2, umfassend ein Reifenrahmenglied (12), welches aus einem Harzmaterial besteht und welches den Wulstabschnitt (16) und den Seitenabschnitt (18) einschließt.

4. Reifen (10) nach einem der Ansprüche 1 bis 3, wobei ein Abschlussende (14A) auf einer Wulstkernseite der Verstärkungsschicht (14) am Umfang des Wulstkerns (22) angeordnet ist.

5. Reifen (10) nach einem der Ansprüche 1 bis 3, wobei:
der Wulstkern (22) aus einem Strangwulst gebildet ist; und
ein Abschlussende (14A) auf einer Wulstkernseite der Verstärkungsschicht (14) zwischen Korden (20) des Wulstkerns (22) angeordnet ist.

## Revendications

1. Bandage pneumatique (10), comprenant :
une partie de talon (16) dans laquelle est noyée une tringle (22) composée de câbles recouverts de résine (20) ; **caractérisé par** :
une couche de renforcement (14) composée d'un matériau de renforcement (30) recouvert par un matériau de résine, soudée thermiquement sur la tringle (22), et s'étendant de la partie de talon (16) vers une partie latérale (18) connectée au côté externe, dans une direction radiale du bandage pneumatique, de la partie de talon (16).

2. Bandage pneumatique (10) selon la revendication 1, dans lequel :
un élément de renforcement du talon (36) est disposé au niveau de la partie de talon (16), l'élément de renforcement du talon (36) s'étendant de la tringle (22) vers le côté externe, dans la direction radiale du bandage pneumatique, et ayant une épaisseur, dans une direction de la largeur du bandage pneumatique, réduite lors de la progression vers le côté externe dans la direction radiale du bandage pneumatique.

3. Bandage pneumatique (10) selon les revendications 1 ou 2, comprenant un élément de cadre du bandage pneumatique (12) composé d'un matériau de résine et incluant la partie de talon (16) et la partie latérale (18).

4. Bandage pneumatique (10) selon l'une quelconque des revendications 1 à 3, dans lequel une extrémité terminale (14A) sur un côté de la tringle de la couche de renforcement (14) est positionnée au niveau d'une périphérie de la tringle (22).

5. Bandage pneumatique (10) selon l'une quelconque des revendications 1 à 3, dans lequel :
la tringle (22) est formée à partir d'un talon à torons ; et
une extrémité terminale (14A) sur le côté de la tringle de la couche de renforcement (14) est positionnée entre des câbles (20) de la tringle (22).
